# EUROPEAN PATENT SPECIFICATION

(11) **EP 4 407 100 B1**
(45) Date of publication and mention of the grant of the patent: **05.03.2025**
(21) Application number: 23169532.1
(22) Date of filing: 24.04.2023
(51) Int. Cl.: E02B 7/36, E02B 3/10, E02B 8/02, B08B 1/00

(54) **AN UNDERWATER CLEANING DEVICE FOR A GATE SLOT AND USE METHOD THEREOF**
UNTERWASSERREINIGUNGSVORRICHTUNG FÜR EINEN TORSCHLITZ UND VERWENDUNGSVERFAHREN DAFÜR
DISPOSITIF DE NETTOYAGE IMMERGÉ POUR VANNE D'ÉCLUSE ET SON PROCÉDÉ D'UTILISATION

(30) Priority: 30.01.2023 CN 202310099206
(43) Date of publication of application: 31.07.2024
(73) Proprietor: China Three Gorges Corporation, Wuhan, Hubei 430010 (CN); China Three Gorges Construction Engineering Corporation, Beijing 101199 (CN)
(72) Inventor: TAN, Zhiguo, Wuhan 430010 (CN); GAO, Peng, Wuhan 430010 (CN); ZHAO, Qiang, Wuhan 430010 (CN); XIAO, Xinming, Wuhan 430010 (CN)
(74) Representative: Patentanwälte und Rechtsanwalt Weiß, Arat & Partner mbB

(56) References cited:
- CN-A- 112 705 492
- CN-U- 207 567 816

## Description

### Technology Field

The present disclosure relates to the field of water sluice gate cleaning technology, and the present invention is directed towards an underwater cleaning device for a gate slot and its use method thereof.

### Background technology

A water sluice gate is an important hydraulic structure configured to open or close a water channel, the water sluice gate mainly comprises a main movable portion, an embedded portion, and a hoisting device. Wherein, the main movable portion is configured to close or open an orifice and is generally known as a sluice gate. The embedded portion comprises a main rail, a guide rail, a hinge base, a bottom sill, etc., which are buried around the orifice to form a gate slot for movement of the sluice gate. Document CN 112 705 492 A discloses for example an underwater cleaning device.

In actual use, debris such as stones, sludge, and construction waste may accumulate into the gate slot during long-term operation of the sluice gate, and therefore the debris needs to be cleaned and erosion pit-holes need to be repaired and patched regularly.

In prior art, underwater inspection and cleaning of a sluice gate is mostly done by means of underwater cleaning by a diver or a dredging pump: underwater inspection and cleaning by a diver has strict requirements of water flow velocity and water depth at the gate slot. Under a circumstance that the water flow velocity is fast and the water depth is high, it would be very difficult for a diver to conduct underwater inspection and cleaning, which would have high danger, low efficiency, and limited usage conditions. The use of a dredging machine to clean and suck out sediments on the inner wall or bottom of the gate slot in a state of underwater may be affected by multiple factors such as water flow, etc., which would cause the automatic cleaning equipment to tilt during movement along the gate slot, thus the sediment cleaning effect is adversely affected.

### Summary of the invention

Therefore, the technical problem to be solved by the present invention is to overcome the defect in the prior art that an automatic cleaning equipment used for gate slot cleaning may be affected by multiple factors such as water flow, etc. in a state of underwater, which would cause the automatic cleaning equipment to tilt during movement along the gate slot and adversely affect the sediment cleaning effect. Thus, an underwater cleaning device for a gate slot and a use method thereof are provided.

To solve the above problem, the present invention provides an underwater cleaning device for a gate slot that comprises:
a frame, wherein the frame comprises a bottom plate and vertical braces provided at four corners of the bottom plate, each vertical brace is provided with a climbing structure, and each of the climbing structures is provided with a climbing bracket, the climbing brackets are fixedly connected to the vertical braces by means of connection rods, and the climbing brackets are configured to be electromagnetically attracted to an inner wall of the gate slot;
a horizontal sensor provided on the bottom plate;
a controller in communicational connection with the horizontal sensor and the climbing brackets, wherein, in a state of underwater, the horizontal sensor is configured to sense the levelness of the bottom plate and transmit the result to the controller in real time, the controller is configured to control the climbing brackets to move up and down along the gate slot to maintain the bottom plate in a horizontal state.

In some embodiments, the climbing structure further comprises a movable base, a driving wheel is provided on the movable base, and the driving wheel is meshed with a gear rack on one side of a connection plate, and a first power member and a driven wheel are disposed in the movable base, the driving wheel and the driven wheel are respectively arranged on both sides of the connection plate, the driving end of the first power member is rotationally connected to the driving wheel, the driving wheel is rotationally connected to the driven wheel by means of intermediate wheels, and the driven wheel is meshed with a gear rack on the other side of the connection plate.

In some embodiments, the movable base is provided with a first electromagnetic attraction plate component in a direction facing the inner wall of the gate slot, a fixed base is fixedly provided at one end of the connection plate away from the movable base, and the fixed base is provided with a second electromagnetic attraction plate component in a direction facing the inner wall of the gate slot.

In some embodiments, the frame further comprises transverse braces, the transverse braces are fixedly connected to the vertical braces, and the transverse braces are provided with a camera.

In some embodiments, the horizontal sensor comprises a pedestal, a middle contact ball arranged in the pedestal, and several contacts arranged on an inner wall of the pedestal, the middle contact ball is connected to the pedestal by means of a conductive wire, and the middle contact ball is filled with hydrogen or nitrogen.

In some embodiments, the lower surface of the bottom plate is provided with at least one second power member and at least one obstacle clearing structure, and the lower surface of the bottom plate is provided with at least one sliding rail along the length direction, the second power member is configured to drive the obstacle clearing structure to slide along the sliding rail by means of a shifting chain, the second power member, the obstacle clearing structure and the sliding rail are all arranged in a one-to-one correspondence manner.

In some embodiments, the obstacle clearing structure comprises an obstacle clearing arm and/or a dredging machine, wherein the obstacle clearing arm and/or dredging machine is slidably connected to the sliding rail by means of a shifting base.

In some embodiments, the upper surface of the bottom plate is provided with a sealed cabin and a generator, the controller, a power supply and a signal transceiver are arranged inside the sealed cabin, a surface of the sealed cabin is provided with a control panel, and the generator is connected to the power supply by a wire.

A method of using an underwater cleaning device for a gate slot, wherein a horizontal sensor senses the levelness of a bottom plate in real time in water and transmits the result to a controller, and the controller controls one or more climbing brackets to move up and down along the gate slot to adjust the levelness of the bottom plate.

In some embodiments, the method of using an underwater cleaning device for a gate slot comprises the following steps:
Step 1, assembly at an opening of the gate slot: selecting appropriate frame members based on the dimensions of the gate slot, and assembling a frame and accessories on a platform near the opening of the gate slot, then using lifting equipment to integrally hoist the apparatus into the orifice of the gate slot, and starting the apparatus to supply power so as to cause the climbing brackets to be electromagnetically attracted to an inner wall of the gate slot to integrally fix the apparatus to the opening of the gate slot;
Step 2, movement into place within the gate slot: by alternately electromagnetically attracting the fixed bases and the movable bases of respective climbing brackets to the gate slot, with the movable bases moving in a stepwise manner, causing the frame to gradually descend from the orifice of the gate slot; wherein the horizontal sensor arranged on the bottom plate of the frame automatically senses a deviation value and transmits a signal to an analysis and control apparatus, and if the deviation value is out of tolerance, adjusting the frame to a reasonable range by means of fine tuning by the movement of a single climbing bracket or a plurality of climbing brackets, and then continuing with descension of the frame;
Step 3, checking and cleaning the sediments: after the frame enters underwater, cameras on the obstacle clearing arm and the dredging machine collect video signals, and with an image capturing and recognition program internally provided in the controller, taking points from the acquired image contour to compare the acquired image contour with a built-in image from an image library for determination, so that the characteristics, the number and the volume of the sediments in the gate slot are reasonably recognized and judged, even under a condition that the underwater water quality is turbid; the controller controls the obstacle clearing arm and the dredging machine to perform multi-dimensional movement to check and clean the gate slot and its bottom sill, the obstacle clearing arm clamps and cleans large object blocks, and the dredging machine flushes and cleans sludge, or the obstacle clearing arm and the dredging machine move to the same location at the bottom of the frame for cooperative cleaning, the obstacle clearing arm is connected to a manipulator by means of rotational sleeving or snap-fitting, the manipulator is one of an electric drill, an electric welding gun, a scraper, or a spraying gun;
Step 4, returning and removing the frame after the cleaning is completed: after completing the cleaning, according to a reverse operation of the above descension procedure, lifting the frame to the orifice of the gate slot to complete the operation.

The technical solutions of the present invention have the following advantages:
1. The underwater cleaning device for a gate slot provided by the present invention comprises a frame, wherein the frame comprises a bottom plate and vertical braces provided at four corners of the bottom plate, each vertical brace is provided with a climbing structure, and each of the climbing structures is provided with a climbing bracket, the climbing brackets are fixedly connected to the vertical braces by means of connection rods, and the climbing brackets are configured to be electromagnetically attracted to an inner wall of the gate slot; a horizontal sensor provided on the bottom plate; a controller in communicational connection with the horizontal sensor and the climbing brackets, wherein, in a state of underwater, the horizontal sensor is configured to sense the levelness of the bottom plate and transmit the result to the controller in real time, the controller is configured to control the climbing brackets to move up and down along the gate slot to maintain the bottom plate in a horizontal state. When the frame enters underwater, as affected by multiple factors such as water flow, etc., the bottom plate is not always in a horizontal state. When the bottom plate is tilted, the horizontal sensor senses the tilting degree of the bottom plate and transmits the result to the controller, the controller then controls any one or more climbing structures on the vertical braces to make climbing bracket(s) of the one or more climbing structures move up and down along the gate slot to adjust the levelness of the bottom plate. After arriving at the corresponding position, the climbing bracket(s) is/are electromagnetically attracted to an inner wall of the gate slot to fix the apparatus to the gate slot to ensure that the apparatus is in a normal operation state so as to achieve ideal sediment cleaning effect. Meanwhile, in case of a large water flow velocity and a deep water depth, there is no need for a diver to enter underwater for inspection or cleaning, so it has the advantages of low danger, high efficiency, and good economic benefits.
2. In the underwater cleaning device for a gate slot provided by the present invention, the climbing structure further comprises a movable base, a driving wheel is provided on the movable base, and the driving wheel is meshed with a gear rack on one side of a connection plate, and movement of the movable base relative to the connection plate of the climbing bracket is realized by means of meshing the driving wheel with the gear rack. A first power member and a driven wheel are disposed in the movable base, the driving wheel and the driven wheel are respectively arranged on both sides of the connection plate, the driving end of the first power member is rotationally connected to the driving wheel, the driving wheel is rotationally connected to the driven wheel by means of intermediate wheels, and the driven wheel is meshed with a gear rack on the other side of the connection plate. The first power member drives the driving wheel to rotate, and the driving wheel drives the driven wheel to rotate by means of intermediate wheels. The driving wheel and the driven wheel are respectively arranged on both sides of the connection plate to realize balanced motion of the connection plate during movement.
3. In the underwater cleaning device for a gate slot provided by the present invention, the movable base is provided with a first electromagnetic attraction plate component in a direction facing the inner wall of the gate slot. When there is no need for the movable base to move, after the first electromagnetic attraction plate component is powered on, the first electromagnetic attraction plate component and a rigid member in the gate slot are attracted together to maintain fixed, and when the movable base needs to move, the first electromagnetic attraction plate component is powered off and separated from the gate slot. A fixed base is fixedly provided at one end of the connection plate away from the movable base, and the fixed base is provided with a second electromagnetic attraction plate component in a direction facing the inner wall of the gate slot. When the fixed base does not need to move, after the second electromagnetic attraction plate component is powered on, the second electromagnetic attraction plate component and the rigid member in the gate slot are attracted together to maintain fixed, and when the fixed base needs to move, the second electromagnetic attraction plate component is powered off and separated from the gate slot.
4. In the underwater cleaning device for a gate slot provided by the present invention, the frame further comprises transverse braces, the transverse braces are fixedly connected to the vertical braces, and the transverse braces are provided with a camera to capture underwater images in real time.
5. In the underwater cleaning device for a gate slot provided by the present invention, the horizontal sensor comprises a pedestal, a middle contact ball arranged in the pedestal, and several contacts arranged on an inner wall of the pedestal, the middle contact ball is connected to the pedestal by means of a conductive wire, and the middle contact ball is filled with hydrogen or nitrogen. The horizontal sensor is composed of a middle contact ball and a plurality of peripheral contacts. The middle contact ball is connected to the pedestal by the conductive wire, and the contact ball is internally filled with hydrogen or any other gas lighter than air, so that the contact ball floats in the air and maintains vertical. When the bottom plate is tilted and causes the horizontal sensor to be tilted, the middle contact ball would come into contact with one contact on the peripheral edge and thus conduct electricity, then a deflection indication signal is sent to the control system for adjusting the levelness of the bottom plate.
6. In the underwater cleaning device for the gate slot provided by the present invention, the lower surface of the bottom plate is provided with at least one second power member and at least one obstacle clearing structure, and the lower surface of the bottom plate is provided with at least one sliding rail along the length direction, the second power member is configured to drive the obstacle clearing structure to slide along the sliding rail by means of a shifting chain, so as to clear sludge and other sediments from the bottom of the gate slot by the obstacle clearing structure sliding along the length direction of the bottom plate after arriving at the bottom of the gate slot. The second power member, the obstacle clearing structure and the sliding rail are all arranged in a one-to-one correspondence manner to facilitate allowing each second power member to drive each obstacle clearing structure to move by means of each sliding rail, so as to clear obstacles of different dimensions.
7. In the underwater cleaning device for a gate slot provided by the present invention, the obstacle clearing structure comprises a shifting base, the obstacle clearing structure comprises an obstacle clearing arm and/or a dredging machine, wherein the obstacle clearing arm and/or dredging machine is slidably connected to the sliding rail by means of the shifting base, so that the connection between the obstacle clearing structure and the sliding rail is realized by means of the shifting base.
8. In the underwater cleaning device for a gate slot provided by the present invention, the upper surface of the bottom plate is provided with a sealed cabin and a generator, the controller, a power supply and a signal transceiver are arranged inside the sealed cabin to achieve waterproof function for the controller, the power supply and the signal transceiver, so that normal operation thereof in a underwater state can be ensured. A surface of the sealed cabin is provided with a control panel, and the generator is connected to the power supply by a wire, the control panel is configured to facilitate on-site operation by an underwater person.
9. In the method of using an underwater cleaning device for a gate slot provided by the present invention, a horizontal sensor senses the levelness of a bottom plate in real time in water and transmits the result to a controller, and the controller controls one or more climbing brackets to move up and down along the gate slot to adjust the levelness of the bottom plate, so that the bottom plate is always kept in a horizontal state.

### Brief description of the drawings

In order to illustrate technical solutions in specific embodiments of the present invention or in the prior art more clearly, drawings that need to be used in the description of the specific embodiments or the prior art are briefly introduced hereinafter. Apparently, the drawings described below are just some embodiments of the present invention. And for a person with ordinary skill in the art, other drawings can be obtained according to these drawings without expenditure of creative labor.
Figure 1 is a structural schematic diagram of an underwater cleaning device for a gate slot connected to a gate slot according to an embodiment of the present invention;
Figure 2 is a schematic diagram of an underwater cleaning device for a gate slot according to an embodiment of the present invention;
Figure 3 is an overhead view of an underwater cleaning device for a gate slot according to an embodiment of the present invention;
Figure 4 is a side view of an underwater cleaning device for a gate slot according to an embodiment of the present invention;
Figure 5 is a structural schematic diagram of a climbing structure of an underwater cleaning device for a gate slot according to an embodiment of the present invention;
Figure 6 is a structural schematic diagram of a horizontal sensor of an underwater cleaning device for a gate slot according to an embodiment of the present invention.

Reference signs in the drawings are listed as follows: 1. gate slot; 2. climbing bracket; 3. connection rod; 4. transverse brace; 5. bottom plate; 6. sealed cabin; 7. horizontal sensor; 8. second power member; 9. generator; 10. camera; 11. dredging machine; 12. obstacle clearing arm; 13. shifting base; 14. shifting chain; 15. vertical brace; 16. sliding rail; 17. connection plate; 18. first power member; 19. movable base; 20. fixed seat; 21. driving wheel; 22. driven wheel; 23. first electromagnetic attraction plate component; 24. second electromagnetic attraction plate component; 25. pedestal; 26. contact; 27. middle contact ball.

### Detailed description of the embodiments

The technical solutions of the present invention will be described clearly and completely with reference to the drawings. Apparently, the described embodiments are some embodiments of the present invention, rather than all of the embodiments. Based on the embodiments described in the present invention, all other embodiments obtainable by a person with ordinary skilled in the art without expenditure of creative labor shall fall within the protection scope of the present invention.

In the description of the present application, it should be noted that terms of "center", "upper", "lower", "left", "right", "vertical", "horizontal", "inside", "outside", etc. indicate orientation or positional relationships based on the orientation or positional relationships shown in the drawings, and are only intended to facilitate describing the present application and simplifying the description, rather than indicating or implying that the device or element referred to must have a specific orientation or must be constructed and operated in a specific orientation, and therefore cannot be understood as a limitation to the present application. In addition, terms such as "first", "second", "third" are only used for descriptive purpose and cannot be understood as indicating or implying relative importance.

In the description of the present invention, it should be noted that, unless explicitly specified and defined otherwise, terms of "mounted", "coupled", and "connected" should be understood in a broad sense, for example, it may be a fixed connection, a detachable connection, or an integral connection; it may be a mechanical connection or an electrical connection; it may be a direct connection, or an indirect connection via an intermediate medium, or it may be an internal communication between two elements. For a person with ordinary skilled in the art, the specific meanings of the above terms in the present invention may be understood according to specific circumstances.

In addition, the technical features involved in different embodiments of the present invention described below can be combined with each other as long as there is no conflict between each other.

### Embodiment 1

An underwater cleaning device for a gate slot 1 is provided and comprises: a frame, wherein the frame comprises a bottom plate 5 and vertical braces 15 provided at four corners of the bottom plate 5, each vertical brace 15 is provided with a climbing structure, and each of the climbing structures is provided with a climbing bracket 2, the climbing brackets 2 are fixedly connected to the vertical braces 15 by means of connection rods 3, and the climbing brackets 2 are configured to be electromagnetically attracted to an inner wall of the gate slot 1; a horizontal sensor 7 provided on the bottom plate 5; a controller in communicational connection with the horizontal sensor 7 and the climbing brackets 2, wherein, in a state of underwater, the horizontal sensor 7 is configured to sense the levelness of the bottom plate 5 and transmit the result to the controller in real time, the controller is configured to control the climbing brackets 2 to move up and down along the gate slot 1 to maintain the bottom plate 5 in a horizontal state. When the frame enters underwater, as affected by multiple factors such as water flow, etc., the bottom plate 5 is not always in a horizontal state. When the bottom plate 5 is tilted, the horizontal sensor senses the tilting degree of the bottom plate 5 and transmits the result to the controller, the controller then controls any one or more climbing structures on the vertical braces 15 to make climbing bracket(s) 2 of the one or more climbing structures move up and down along the gate slot 1 to adjust the levelness of the bottom plate 5. After arriving at the corresponding position, the climbing bracket(s) 2 is/are electromagnetically attracted to an inner wall of the gate slot 1 to fix the apparatus to the gate slot 1 to ensure that the apparatus is in a normal operation state so as to achieve ideal sediment cleaning effect. Meanwhile, in case of a large water flow velocity and a deep water depth, there is no need for a diver to enter underwater for inspection or cleaning, so it has the advantages of low danger, high efficiency, and good economic benefits.

### Embodiment 2

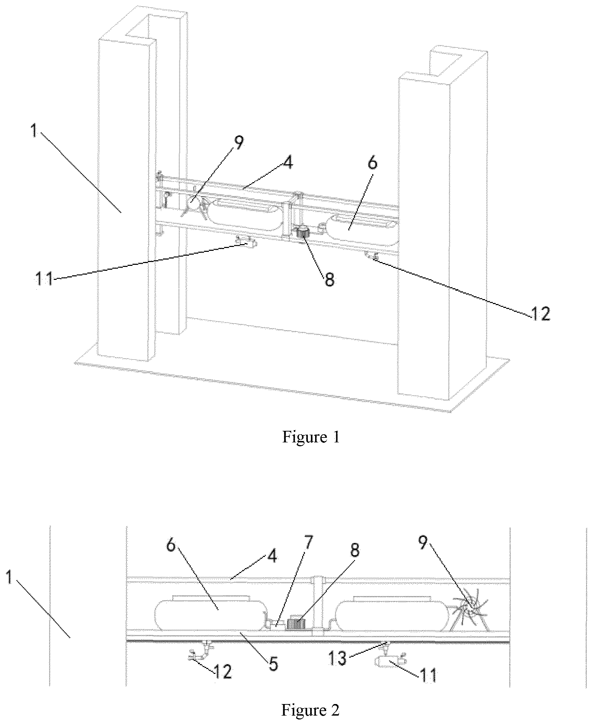

A specific implementation way of the underwater cleaning device for a gate slot 1, as shown in Figures 1 to 6, comprises: a frame, wherein the frame is provided with a bottom plate 5 and vertical braces 15 fixedly provided at four corners of the bottom plate 5, each vertical brace 15 is connected to a climbing structure by a connection rod, and the climbing structures are configured to be electromagnetically attracted to an inner wall of the gate slot 1.

As shown in Figures 1 to 4, the frame is detachably arranged, and the frame consists of a bottom plate 5, vertical braces 15, and transverse braces 4. Wherein, the upper surface of the bottom plate 5 is provided with a generator 9, a second power member 8, sealed cabins 6, and a horizontal sensor 7. The lower surface of the bottom plate 5 is provided with an obstacle clearing structure, and the frame has a function of supporting the obstacle clearing structure, the second power member 8, the generator 9, and the sealed cabins 6. Specifically, the horizontal sensor 7 is an electronic contact sensing type level gauge configured to detect the levelness of the bottom plate 5 and the cleaning device. The level gauge is composed of a middle contact ball 27 and several contacts 26. Wherein, the middle contact ball 27 is made of a light and thin metal, and its spherical body is connected to a pedestal 25 by a fine conductive wire. The middle contact ball 27 is filled with hydrogen, the hydrogen is lighter than air, so that the middle contact ball 27 floats in the air and maintains vertical. When the bottom plate 5 is tiled and causes the horizontal sensor 7 to be tilted, the middle contact ball 27 would come into contact with one contact 26 on the peripheral edge and thus conduct electricity, then a deflection indication signal is sent to the control system for adjusting the levelness of the bottom plate 5.

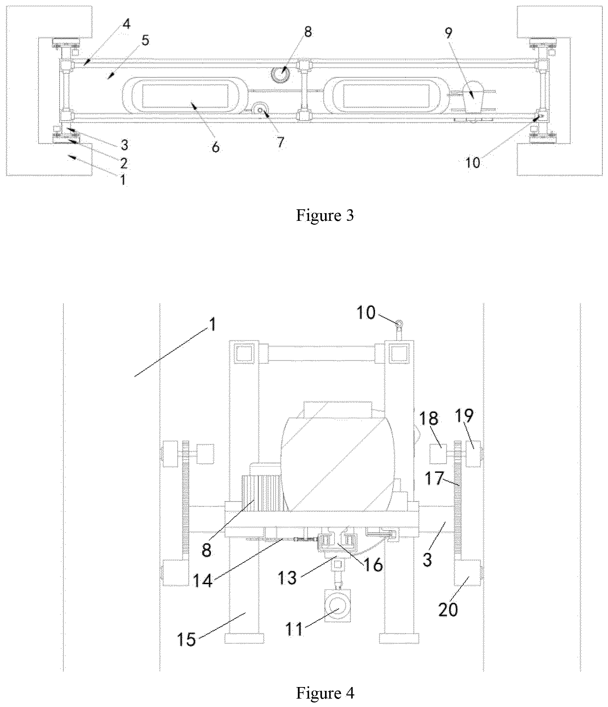

As shown in Figure 4, the climbing structure comprises a climbing bracket 2, a connection plate 17 of the climbing bracket 2 is fixedly connected to one of the vertical braces 15 by means of a connection rod 3. The climbing structure further comprises a movable base 19, a driving wheel 21 is provided on the movable base 19, and the driving wheel 21 is meshed with a gear rack on one side of the connection plate 17.

By measuring the levelness with the horizontal sensor 7, when the bottom plate 5 is tilted, the horizontal sensor 7 senses the tilting degree of the bottom plate 5 and transmits the sensing result to the controller, and after calculation by the controller, the controller then controls any one or more climbing structures on the vertical braces at four corners of the bottom plate 5 according to the calculation result, so as to make climbing bracket(s) 2 of the one or more climbing structures move up and down along the gate slot 1 to adjust the levelness of the bottom plate 5, thereby ensuring that the apparatus is in a normal operation state.

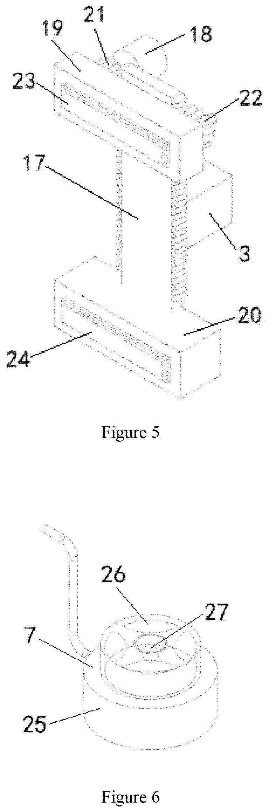

As shown in Figure 4 and Figure 5, the climbing structure further comprises a movable base 19 provided at an upper end of the connection plate 17, with a first power member 18, a driving wheel 21, intermediate wheels and a driven wheel 22 disposed in the movable base 19, wherein a drive shaft is disposed between the first power member 18 and the driving wheel 21, the intermediate wheels are disposed between the driving wheel 21 and the driven wheel 22, and the driving wheel 21 and the driven wheel 22 are respectively arranged on both sides of the connection plate 17. Specifically, the first power member 18 comprises a drive motor and a reducer. The driving wheel 21, the driven wheel 22 and the intermediate wheels are all gears. The front end of the driving wheel 21 is equipped with the first power member 18, while the front end of the driven wheel 22 is not equipped with a power member, using one power member for driving is able to ensure the stability and reliability of torque transmission. The drive motor drives the drive shaft to rotate, the drive shaft drives the driving wheel 21 to rotate, and the driving wheel 21 drives the driven wheel 22 to rotate by means of the intermediate wheels. The driving wheel 21 and the driven wheel 22 are respectively arranged in the movable base 19 to be in meshing transmission with the gear racks on two sides of the connection plate 17. It should be noted that the number of the intermediate wheels is 4, so as to ensure that rotation directions of the driving wheel 21 and the driven wheel 22 are opposite, and ensure that the driving wheel 21 and the driven wheel 22 of the movable base 19 move in an upward or downward direction synchronously on both sides of the connection plate 17. To fix the climbing structure, the movable base 19 is provided with a first electromagnetic attraction plate component 23 in a direction facing the inner wall of the gate slot 1, a fixed base 20 is fixedly provided at one end of the connection plate 17 away from the movable base 19. To simplify the motion structure, the fixed base 20 is fixedly arranged at a lower end of the connection plate 17, and the fixed base 20 is provided with a second electromagnetic attraction plate component 24 in a direction facing the inner wall of the gate slot 1. The first electromagnetic attraction plate component 23 comprises a first electromagnetic base plate disposed on the movable base 19, and a first electromagnetic plate disposed on the first electromagnetic base plate. The second electromagnetic attraction plate component 24 comprises a second electromagnetic base plate disposed on the movable base 19, and an electromagnetic plate disposed on the second electromagnetic base plate. The fixed base 20 is arranged at the lower or upper part of the climbing bracket 2, and the movable base 19 is arranged on the other side of the climbing bracket 2, and the upper and lower positions of the movable base 19 and the fixed base 20 can be exchanged.

As shown in Figures 1-3, the upper surface of the bottom plate 5 is further provided with two sealed cabins 6, a power supply, the controller, a signal transceiver, an electric energy frequency-conversion frequency modulator and an energy storage device are arranged inside the sealed cabins 6. The sealed cabins 6 are connected to the equipment outside the sealed cabins 6 by waterproof joints and cables so as to be able to transmit electrical energy, control instructions and operation data, and the sealed cabins 6 are connected to a control room above water by a towed cable. If a diver performs a diving operation along with the frame, the waterproof control panel on the sealed cabins 6 can also realize underwater on-site operation.

To clear sediments such as sludge at the bottom of the gate frame, as shown in Figures 2-4, the lower surface of the bottom plate 5 is provided with sliding rails 16 along the length direction, each of the sliding rails 16 is sleeved with a clamp bracket internally provided with contact rollers, a shifting base 13 is connected under the clamp bracket, and an obstacle clearing structure is connected under the shifting base 13. In principle, each obstacle clearing structure is provided on one sliding rail 16 separately, so that common rail interference does not occur during operation. The bottom plate 5 is provided with second power members 8, the second power members 8 may be a plurality of sets of driving mechanisms, and in principle, each set of the second power members 8 drives one obstacle clearing structure separately, that is, the second power member 8, the obstacle clearing structure and the sliding rail 16 are all arranged in a one-to-one correspondence manner. Specifically, the second power member 8 comprises a walking motor and a reducer gearbox. The obstacle clearing structure comprises an obstacle clearing arm 12 and a dredging machine 11, wherein the obstacle clearing structure is moved by the second power member 8 and a driving gear through a shifting chain 14, thereby driving the obstacle clearing arm 12 and the dredging machine 11 to move by means of the clamp bracket and the shifting base attached thereto. The obstacle clearing arm 12 and the dredging machine 11 are slidably connected to the sliding rails 16 by the shifting bases 13, and each of the shifting bases 13 is preferably installed in an embedded manner in cooperation with the rail to make each of the shifting bases 13 move back and forth on the rail. According to the number of the obstacle clearing structures, a single-rail or multi-rail arrangement form may be used.

As shown in Figure 2 and Figure 3, a generator 9 is further arranged on the frame to supply power for the entire device. The generator 9 is connected to the electric energy frequency-conversion frequency modulator, the energy storage device and the power supply inside the sealed cabins 6 by wires.

As shown in Figure 4, cameras 10 are arranged upon the transverse braces 4, and also at an end part of the obstacle clearing arm 12 and at an end part of the dredging machine 11. The cameras 10 have functions such as pan-tilt-zoom (PTZ), light supplement and night vision, thereby facilitating timely tracking and omnidirectional observation, and facilitating observation in an environment with poor water quality and poor lighting. One of the cameras 10 is arranged upon the transverse braces 4 to generally observe the surrounding environment in a state of underwater. And some of the cameras 10 are arranged at the end part of the obstacle clearing arm 12 and at the end part of the dredging machine 11 to observe the local environment accurately during working for performing precise operation. Signal collected by the cameras 10 is transmitted to the controller in the sealed cabin 6 in a wired manner, and after signal processing by the controller, and then the result is transmitted to the control room above the water surface in a wired manner. The instructions sent by the control room are transmitted in a wired manner to ensure the stability of signal transmission. After a video signal collected by the cameras 10 is transmitted to the controller inside the sealed cabins 6 or a control console in the control room, video information recognition and analysis is performed by a built-in control software, and automatic recognition, automatic judgement and automatic operation are performed according to work tasks pre-built by personnel, so that the operation mode is simplified, the continuity and reliability of the operation are ensured, and the intelligent level is effectively improved.

It should be noted that the device of the present patent application may adopt two control modes including a remote master control mode and an on-site control mode, as well as two control manners including an automatic control manner and a manual control manner. That is, the control system is divided into a master control device arranged above the water surface and an on-site control device arranged inside the sealed cabins 6. The master control device above the water surface is mainly used for overall control, timely observation, real-time recording and analysis of data and information by an operator with the device of the present patent application. And the master control device may also perform automatic control under the control of a program. The on-site control device is mainly used for automatic control, and may also be on-site controlled by an operator who has followed the detection platform to enter underwater when needed.

During the specific implementation process, according to the structure of the gate slot 1, standard interchangeable transverse braces 4 or vertical braces 15 are selected for assembling at will, so as to assemble the braces into frames have different lengths and widths for inspection of gate slots 1 with different dimensions. After the assembly of the frame and the climbing structures, the generator 9, etc. installed on the frame is completed, the entire apparatus is first moved to the position at the orifice of the gate slot 1, the energy storage device inside the sealed cabins 6 is used for supplying power. After being powered on, the movable base 19 or the fixed base 20 is electromagnetically attracted to or separated from the steel structural members of the gate slot 1, and movement thereof is carried out by synchronous stepwise motions of the movable base 19 and the fixed base 20. Namely, when the movable base 19 is attracted to and fixed on the gate slot 1, the fixed base 20 is separated from the gate slot 1 at the same time; or, when the movable base 19 is separated from the gate slot 1, the fixed base 20 is attracted to and fixed on the gate slot 1 at the same time, and in combination with the driving by the first power member 18 via the meshing of gears and gear racks, gradual descension from the orifice of the gate slot 1 is realized. The horizontal sensor 7 on the bottom plate 5 is connected to the sealed cabins 6 in a wired manner. If a deviation of levelness is detected during the movement or the working process, the middle contact ball 27 of the level gauge comes into contact with one peripheral contact point 26, then a signal is transmitted to the controller inside the sealed cabin 6, and the controller sends the signal to the master control room. After receiving the signal, the console in the control room judges whether the deviation exceeds a tolerance range. If the deviation does not exceed the tolerance range, no deviation adjustment will be made, and if the deviation exceeds the tolerance range, adjustment will be made. During the adjustment process, respective climbing brackets 2 are integrally coordinated and controlled, that is, when movement of the climbing brackets 2 on the opposite side is stopped, the climbing brackets 2 on the lower side is slightly lifted at the same time, that is, the first power member 18 drives the driving wheel 21 and the driven wheel 22 to rotate, so that the connection plate 17 moves upwards and drives the bottom plate 5 on the lower side to move upwards until the levelness of the bottom plate 5 is adjusted to a reasonable range.

In a state of underwater, the second power members 8 drive the obstacle clearing arm 12 and the dredging machine 11 to move. The obstacle clearing arm 12 and the dredging machine 11 are able to perform multi-dimensional movement and rotation to inspect a vertical surface and a bottom sill surface of the gate slot 1. A manipulator of the obstacle clearing arm 12 clamps and clears large block-shaped debris, the large block-shaped debris cleared by the obstacle clearing arm 12 can be took away from an area of the gate slot 1 by water flow, or the large block-shaped debris can be clamped and put into the frame by the obstacle clearing arm 12, and after the cleaning is completed, the large block-shaped debris is brought out of the water surface by the frame for inspection and analysis. A base of the manipulator is connected to the obstacle clearing arm 12 by rotational sleeving. The dredging machine 11 is configured to flush and clean loose silt and other sediments. When it is necessary to flush and clamp the sediments simultaneously, the obstacle clearing arm 12 and the dredging machine 11 may work together cooperatively for cleaning. At this time, the cameras 10 installed on the obstacle clearing arm 12 and the dredging machine 11 capture images under the control of a program in the controller, and the captured images are automatically recognized by the program. And with the image capturing and recognition program internally provided in the controller, points are taken from the contour of the image captured by the cameras to compare the acquired image contour with a built-in image from an image library for determination, so that the characteristics, the number and the volume of the sediments in the gate slot 1 are reasonably recognized and judged, even under a condition that the underwater water quality is turbid, so that cleaning is facilitated, and cleaning by automatic grabbing or flushing can be performed under programmed control. It should be noted that, when underwater fine cleaning or measurement is needed, on-site personnel can enter underwater by staying in the frame for operation, and the frame can also serve as a loading platform for underwater transportation of objects. After completing the cleaning, according to a reverse operation of the above-described descension procedure, the frame is lifted to the orifice of the gate slot 1 to complete the operation.

The underwater cleaning device for a gate slot 1 provided by the present invention has the following advantages: (1) the present patent application has a simple structure and strong adaptability. It can adapt to situations with a large water depth and a high flow rate, and can be used for underwater operation in an unmanned manner or a manned manner. By means of combining standard components, the frame can meet the maintenance needs of various orifice dimensions. It not only can be used for situations of underwater operations, but also can be used for various situations of other hole and groove operations above water; (2) there are various forms of underwater operations that can be undertaken by the device. It can be applied to various underwater dredging situations, as well as various working conditions and needs such as underwater welding, measurement, repair, drilling hole, spraying, etc. It can also meet the needs of goods transportation with rapid and accurate movement up and down with objects loaded thereon, and can also meet various operation forms, and covers various needs of underwater construction; (3) innovation of the device is strong, by using innovative apparatuses such as electromagnetic attraction climbing brackets 2, an electronic contact sensing type level gauge, an assembled frame, exchangeable obstacle clearing structures, underwater self-powered units, and underwater on-site control units, etc. The electromagnetic attraction climbing brackets 2 have a simple and reliable structure and are very reliable and flexible. The electronic contact sensing type level gauge has high sensitivity and strong reliability, and can meet the real-time adjustment needs of the system.

As an alternative implementation way, the manipulator of the obstacle clearing arm 12 can also be an electric drill, a scraper, a spraying gun, etc. to perform refined and complex operations. Other than using the equipped manipulator of the obstacle clearing arm 12 for grabbing and clearing debris, the manipulator, which is preferably connected to the obstacle clearing arm 12 by means of rotational sleeving or snap-fitting, can also be replaced with professional repair tools such as an electric drill, a welding gun, a scraper, and a spraying gun for various refined and complex underwater operations.

As an alternative implementation way, the plurality of obstacle clearing structures can also be arranged in a common rail manner. The obstacle clearing structure may also adopt a slidable manner without using a sliding rail, such as by using a clamping slot.

As an alternative implementation way, the obstacle clearing structure may also adopt other movement traction manners such as being pulled by a steel wire rope.

As an alternative implementation way, the number of the intermediate wheels can also be another even number such as 2 or 6.

As an alternative implementation way, the number of the sealed cabins 6 can also be 1, 3, 4, or even more.

As an alternative implementation way, the middle contact ball 27 is filled with nitrogen or any other gas with a density lower than air.

Apparently, the above embodiments are only examples provided for the purpose of clearly describing the present invention, rather than limiting the implementation ways thereof. For a person with ordinary skilled in the art, different forms of modifications or variations can be made based on the above description. It is unnecessary and impossible to exhaustively list all implementation ways herein. Any obvious modification or variation derived from the embodiments described herein are still within the protection scope of the present invention, that is defined by the appended claims.

## Claims

1. An underwater cleaning device for a gate slot, **characterized in** comprising:
a frame, wherein the frame comprises a bottom plate (5) and vertical braces (15) provided at four corners of the bottom plate (5), each vertical brace (15) is provided with a climbing structure, and each of the climbing structures is provided with a climbing bracket (2), the climbing brackets (2) are fixedly connected to the vertical braces (15) by means of connection rods (3), and the climbing brackets (2) are configured to be electromagnetically attracted to an inner wall of the gate slot (1);
a horizontal sensor (7) provided on the bottom plate (5);
a controller in communicational connection with the horizontal sensor (7) and the climbing brackets (2), wherein, in a state of underwater, the horizontal sensor (7) is configured to sense the levelness of the bottom plate (5) and transmit the result to the controller in real time, the controller is configured to control the climbing brackets (2) to move up and down along the gate slot (1) to maintain the bottom plate (5) in a horizontal state.

2. The underwater cleaning device for a gate slot as claimed in claim 1, **characterized in that**, the climbing structure further comprises a movable base (19), a driving wheel (21) is provided on the movable base (19), and the driving wheel (21) is meshed with a gear rack on one side of a connection plate (17), and a first power member (18) and a driven wheel (22) are disposed in the movable base (19), the driving wheel (21) and the driven wheel (22) are respectively arranged on both sides of the connection plate (17), the driving end of the first power member (18) is rotationally connected to the driving wheel (21), the driving wheel (21) is rotationally connected to the driven wheel (22) by means of intermediate wheels, and the driven wheel (22) is meshed with a gear rack on the other side of the connection plate (17).

3. The underwater cleaning device for a gate slot as claimed in claim 2, **characterized in that**, the movable base (19) is provided with a first electromagnetic attraction plate component (23) in a direction facing the inner wall of the gate slot (1), a fixed base (20) is fixedly provided at one end of the connection plate (17) away from the movable base (19), and the fixed base (20) is provided with a second electromagnetic attraction plate component (24) in a direction facing the inner wall of the gate slot (1).

4. The underwater cleaning device for a gate slot as claimed in claim 1, **characterized in that**, the frame further comprises transverse braces (4), the transverse braces (4) are fixedly connected to the vertical braces (15), and the transverse braces (4) are provided with a camera (10).

5. The underwater cleaning device for a gate slot as claimed in claim 1, **characterized in that**, the horizontal sensor (7) comprises a pedestal (25), a middle contact ball (27) arranged in the pedestal (25), and several contacts (26) arranged on an inner wall of the pedestal (25), the middle contact ball (27) is connected to the pedestal (25) by means of a conductive wire, and the middle contact ball (27) is filled with hydrogen or nitrogen.

6. The underwater cleaning device for a gate slot as claimed in any one of claims 1-5, **characterized in that**, the lower surface of the bottom plate (5) is provided with at least one second power member (8) and at least one obstacle clearing structure, and the lower surface of the bottom plate (5) is provided with at least one sliding rail (16) along the length direction, the second power member (8) is configured to drive the obstacle clearing structure to slide along the sliding rail (16) by means of a shifting chain (14), the second power member (8), the obstacle clearing structure and the sliding rail (16) are all arranged in a one-to-one correspondence manner.

7. The underwater cleaning device for a gate slot as claimed in claim 6, **characterized in that**, the obstacle clearing structure comprises an obstacle clearing arm (12) and/or a dredging machine (11), wherein the obstacle clearing arm (12) and/or dredging machine (11) is slidably connected to the sliding rail (16) by means of a shifting base (13).

8. The underwater cleaning device for a gate slot as claimed in claim 6, **characterized in that**, the upper surface of the bottom plate (5) is provided with a sealed cabin (6) and a generator (9), the controller, a power supply and a signal transceiver are arranged inside the sealed cabin, a surface of the sealed cabin (6) is provided with a control panel, and the generator (9) is connected to the power supply by a wire.

9. A method of using the underwater cleaning device for a gate slot as claimed in any one of claims 1-8, **characterized in that**, a horizontal sensor senses the levelness of a bottom plate (5) in real time in water and transmits the result to a controller, and the controller controls one or more climbing brackets (2) to move up and down along the gate slot (1) to adjust the levelness of the bottom plate (5).

10. The method of using an underwater cleaning device for a gate slot as claimed claim 9, **characterized in** comprising the following steps:
Step 1, assembly at an opening of the gate slot (1): selecting appropriate frame members based on the dimensions of the gate slot (1), and assembling a frame and accessories on a platform near the opening of the gate slot (1), then using lifting equipment to integrally hoist the apparatus into the orifice of the gate slot (1), and starting the apparatus to supply power so as to cause the climbing brackets (2) to be electromagnetically attracted to an inner wall of the gate slot (1) to integrally fix the apparatus to the opening of the gate slot (1);
Step 2, movement into place within the gate slot (1): by alternately electromagnetically attracting the fixed bases (20) and the movable bases (19) of respective climbing brackets (2) to the gate slot (1), with the movable bases (19) moving in a stepwise manner, causing the frame to gradually descend from the orifice of the gate slot (1); wherein the horizontal sensor (7) arranged on the bottom plate (5) of the frame automatically senses a deviation value and transmits a signal to an analysis and control apparatus, and if the deviation value is out of tolerance, adjusting the frame to a reasonable range by means of fine tuning by the movement of a single climbing bracket (2) or a plurality of climbing brackets (2), and then continuing with descension of the frame;
Step 3, checking and cleaning the sediments: after the frame enters underwater, cameras (10) on the obstacle clearing arm (12) and the dredging machine (11) collect video signals, and with an image capturing and recognition program internally provided in the controller, taking points from the acquired image contour to compare the acquired image contour with a built-in image from an image library for determination, so that the characteristics, the number and the volume of the sediments in the gate slot (1) are reasonably recognized and judged, even under a condition that the underwater water quality is turbid; the controller controls the obstacle clearing arm (12) and the dredging machine (11) to perform multi-dimensional movement to check and clean the gate slot (1) and its bottom sill, the obstacle clearing arm (12) clamps and cleans large object blocks, and the dredging machine (11) flushes and cleans sludge, or the obstacle clearing arm (12) and the dredging machine (11) move to the same location at the bottom of the frame for cooperative cleaning, the obstacle clearing arm (12) is connected to a manipulator by means of rotational sleeving or snap-fitting, the manipulator is one of an electric drill, an electric welding gun, a scraper, or a spraying gun;
Step 4, returning and removing the frame after the cleaning is completed: after completing the cleaning, according to a reverse operation of the above descension procedure, lifting the frame to the orifice of the gate slot (1) to complete the operation.

## Patentansprüche

1. Unterwasser-Reinigungsvorrichtung für einen Torschlitz, **dadurch gekennzeichnet, dass** sie umfasst:
einen Rahmen, wobei der Rahmen eine Bodenplatte (5) und vertikale Streben (15) umfasst, die an vier Ecken der Bodenplatte (5) vorgesehen sind, wobei jede vertikale Strebe (15) mit einer Kletterstruktur versehen ist und jede der Kletterstrukturen mit einem Kletterhalter (2) versehen ist, wobei die Kletterhalter (2) mittels Verbindungsstangen (3) fest mit den vertikalen Streben (15) verbunden sind und die Kletterhalter (2) so konfiguriert sind, dass sie elektromagnetisch zu einer Innenwand des Torschlitzes (1) angezogen werden;
einen horizontalen Sensor (7), der an der Bodenplatte (5) vorgesehen ist;
eine Steuerung, die in Kommunikationsverbindung mit dem Horizontalsensor (7) und den Kletterhalterungen (2) steht, wobei der Horizontalsensor (7) so konfiguriert ist, dass er in einem Unterwasserzustand die Ebenheit der Bodenplatte (5) erfasst und das Ergebnis in Echtzeit an die Steuerung überträgt, wobei die Steuerung so konfiguriert ist, dass sie die Kletterhalterungen (2) so steuert, dass sie sich entlang des Torschlitzes (1) auf und ab bewegen, um die Bodenplatte (5) in einem horizontalen Zustand zu halten.

2. Die Unterwasser-Reinigungsvorrichtung für einen Torschlitz nach Anspruch 1, **dadurch gekennzeichnet, dass** die Kletterstruktur ferner eine bewegliche Basis (19) umfasst, ein Antriebsrad (21) auf der beweglichen Basis (19) vorgesehen ist und das Antriebsrad (21) mit einer Zahnstange auf einer Seite einer Verbindungsplatte (17) in Eingriff steht, und ein erstes Antriebselement (18) und ein angetriebenes Rad (22) in der beweglichen Basis (19) angeordnet sind, das Antriebsrad (21) und das angetriebene Rad (22) jeweils auf beiden Seiten der Verbindungsplatte (17) angeordnet sind, das Antriebsende des ersten Antriebselements (18) drehbar mit dem Antriebsrad (21) verbunden ist, das Antriebsrad (21) über Zwischenräder drehbar mit dem angetriebenen Rad (22) verbunden ist und das angetriebene Rad (22) mit einer Zahnstange auf der anderen Seite der Verbindungsplatte (17) in Eingriff steht.

3. Die Unterwasser-Reinigungsvorrichtung für einen Torschlitz nach Anspruch 2, **dadurch gekennzeichnet, dass** die bewegliche Basis (19) mit einer ersten elektromagnetischen Anziehungsplattenkomponente (23) in einer Richtung versehen ist, die der Innenwand des Torschlitzes (1) zugewandt ist, eine feststehende Basis (20) fest an einem Ende der Verbindungsplatte (17) weg von der beweglichen Basis (19) vorgesehen ist, und die feststehende Basis (20) mit einer zweiten elektromagnetischen Anziehungsplattenkomponente (24) in einer Richtung versehen ist, die der Innenwand des Torschlitzes (1) zugewandt ist.

4. Die Unterwasser-Reinigungsvorrichtung für einen Torschlitz nach Anspruch 1, **dadurch gekennzeichnet, dass** der Rahmen weiterhin Querstreben (4) umfasst, wobei die Querstreben (4) fest mit den vertikalen Streben (15) verbunden sind und die Querstreben (4) mit einer Kamera (10) versehen sind.

5. Die Unterwasser-Reinigungsvorrichtung für einen Torschlitz nach Anspruch 1, **dadurch gekennzeichnet, dass** der horizontale Sensor (7) einen Sockel (25), eine in dem Sockel (25) angeordnete mittlere Kontaktkugel (27) und mehrere an einer Innenwand des Sockels (25) angeordnete Kontakte (26) umfasst, die mittlere Kontaktkugel (27) mit dem Sockel (25) über einen leitenden Draht verbunden ist und die mittlere Kontaktkugel (27) mit Wasserstoff oder Stickstoff gefüllt ist.

6. Die Unterwasser-Reinigungsvorrichtung für einen Torschlitz nach einem der Ansprüche 1 bis 5, **dadurch gekennzeichnet, dass** die Unterseite der Bodenplatte (5) mit mindestens einem zweiten Antriebselement (8) und mindestens einer Hindernis-Räumstruktur versehen ist, und die Unterseite der Bodenplatte (5) mit mindestens einer Gleitschiene (16) in Längsrichtung versehen ist, das zweite Antriebselement (8) so konfiguriert ist, dass es die Hindernis-Räumstruktur antreibt, um entlang der Gleitschiene (16) mittels einer Verschiebekette (14) zu gleiten, das zweite Antriebselement (8), die Hindernis-Räumstruktur und die Gleitschiene (16) alle in einer Eins-zu-Eins-Entsprechung angeordnet sind.

7. Die Unterwasser-Reinigungsvorrichtung für einen Torschlitz nach Anspruch 6, **dadurch gekennzeichnet, dass** die Hindernis-Räumstruktur einen Hindernis-Räumarm (12) und/oder eine Baggermaschine (11) umfasst, wobei der Hindernis-Räumarm (12) und/oder die Baggermaschine (11) mittels einer Verschiebebasis (13) verschiebbar mit der Gleitschiene (16) verbunden ist.

8. Die Unterwasser-Reinigungsvorrichtung für einen Torschlitz nach Anspruch 6, **dadurch gekennzeichnet, dass** die Oberseite der Bodenplatte (5) mit einer abgedichteten Kabine (6) und einem Generator (9) versehen ist, dass die Steuerung, eine Stromversorgung und ein Signal-Sende-Empfänger innerhalb der abgedichteten Kabine angeordnet sind, dass eine Oberfläche der abgedichteten Kabine (6) mit einem Bedienfeld versehen ist, und dass der Generator (9) mit der Stromversorgung durch ein Kabel verbunden ist.

9. Verfahren zur Verwendung der Unterwasser-Reinigungsvorrichtung für einen Torschlitz nach einem der Ansprüche 1 bis 8, **dadurch gekennzeichnet, dass** ein horizontaler Sensor die Niveaulage einer Bodenplatte (5) in Echtzeit im Wasser erfasst und das Ergebnis an eine Steuerung überträgt, und die Steuerung eine oder mehrere Kletterhalterungen (2) steuert, die sich entlang des Torschlitzes (1) auf und ab bewegen, um die Niveaulage der Bodenplatte (5) einzustellen.

10. Das Verfahren zur Verwendung einer Unterwasser-Reinigungsvorrichtung für einen Torschlitz nach Anspruch 9, **dadurch gekennzeichnet, dass** es die folgenden Schritte umfasst:
Schritt 1, Montage an einer Öffnung des Torschlitzes (1): Auswahl geeigneter Rahmenteile auf der Grundlage der Abmessungen des Torschlitzes (1) und Montage eines Rahmens und von Zubehör auf einer Plattform in der Nähe der Öffnung des Torschlitzes (1), dann Verwendung einer Hebevorrichtung, um die Vorrichtung integral in die Öffnung des Torschlitzes (1) zu heben, und Starten der Vorrichtung, um Energie zuzuführen, so dass die Kletterhalterungen (2) elektromagnetisch zu einer Innenwand des Torschlitzes (1) angezogen werden, um die Vorrichtung integral an der Öffnung des Torschlitzes (1) zu befestigen;
Schritt 2, Bewegung in den Torschlitz (1): durch abwechselndes elektromagnetisches Anziehen der befestigten Basen (20) und der beweglichen Basen (19) der jeweiligen Kletterhalterungen (2) an den Torschlitz (1), wobei sich die beweglichen Basen (19) schrittweise bewegen, wodurch der Rahmen allmählich aus der Öffnung des Torschlitzes (1) herabgelassen wird; wobei der an der Bodenplatte (5) des Rahmens angeordnete Horizontalsensor (7) automatisch einen Abweichungswert erfasst und ein Signal an eine Analyse- und Steuervorrichtung überträgt, und wenn der Abweichungswert außerhalb der Toleranz liegt, der Rahmen mittels Feineinstellung durch die Bewegung eines einzelnen Kletterhalters (2) oder einer Vielzahl von Kletterhalterungen (2) auf einen angemessenen Bereich eingestellt und dann mit dem Absenken des Rahmens fortgefahren wird;
Schritt 3, Kontrolle und Reinigung der Sedimente: nachdem der Rahmen unter Wasser gelangt ist, sammeln Kameras (10) auf dem Hindernis-Räumarm (12) und der Baggermaschine (11) Videosignale, und mit einem Bilderfassungs- und Erkennungsprogramm, das intern in der Steuerung vorgesehen ist, werden Punkte aus der erfassten Bildkontur genommen, um die erfasste Bildkontur mit einem eingebauten Bild aus einer Bildbibliothek zur Bestimmung zu vergleichen, so dass die Eigenschaften, die Anzahl und das Volumen der Sedimente im Torschlitz (1) angemessen erkannt und beurteilt werden, selbst unter einer Bedingung, dass die Unterwasserwasserqualität trüb ist; die Steuerung den Hindernis-Räumarm (12) und die Baggermaschine (11) steuert, um eine mehrdimensionale Bewegung auszuführen, um den Torschlitz (1) und seine Bodenschwelle zu überprüfen und zu reinigen, der Hindernis-Räumarm (12) große Objektblöcke einklemmt und reinigt, und die Baggermaschine (11) Schlamm spült und reinigt, oder der Hindernis-Räumarm (12) und die Baggermaschine (11) bewegen sich zum gemeinsamen Reinigen an die gleiche Stelle am Boden des Rahmens, der Hindernis-Räumarm (12) ist mit einem Manipulator mittels einer Rotationshülse oder einer Schnappverbindung verbunden, der Manipulator ist eine elektrische Bohrmaschine, eine elektrische Schweißpistole, ein Schaber oder eine Sprühpistole;
Schritt 4, Rückführung und Entfernung des Rahmens nach Beendigung der Reinigung: nach Abschluss der Reinigung wird der Rahmen in umgekehrter Reihenfolge wie oben beschrieben in die Öffnung des Torschlitzes (1) gehoben, um den Vorgang abzuschließen.

## Revendications

1. Dispositif de nettoyage sous-marin pour une fente de porte,
**caractérisé en ce qu'il** comprend :
un cadre, dans lequel le cadre comprend une plaque de fond (5) et des renforts verticaux (15) situés aux quatre coins de la plaque de fond (5), chaque renfort vertical (15) est pourvu d'une structure montante, et chacune des structures montantes est pourvue d'un support montant (2), les supports montants (2) sont reliés de manière fixe aux renforts verticaux (15) au moyen de tiges de liaison (3), et les supports montants (2) sont conçus pour être attirés électromagnétiquement par une paroi interne de la fente de porte (1) ;
un capteur horizontal (7) pourvu sur la plaque de fond (5) ;
un dispositif de commande en connexion communicative avec le capteur horizontal (7) et les supports montants (2), dans lequel, dans un état immergé, le capteur horizontal (7) est configuré pour détecter la nivelance de la plaque de fond (5) et transmettre le résultat au dispositif de commande en temps réel, le dispositif de commande est configuré pour commander les supports montants (2) afin qu'ils montent et descendent le long de la fente de porte (1) pour maintenir la plaque de fond (5) dans un état horizontal.

2. Dispositif de nettoyage sous-marin pour une fente de porte selon la revendication 1, **caractérisé en ce que** la structure montante comprend en outre une base mobile (19), une roue d'entraînement (21) est pourvue sur la base mobile (19), et la roue d'entraînement (21) est engrenée avec une crémaillère sur un côté d'une plaque de liaison (17), et un premier élément de puissance (18) et une roue entraînée (22) sont disposés dans la base mobile (19), la roue d'entraînement (21) et la roue entraînée (22) sont respectivement disposées des deux côtés de la plaque de liaison (17), l'extrémité d'entraînement du premier élément de puissance (18) est reliée en rotation à la roue d'entraînement (21), la roue d'entraînement (21) est reliée en rotation à la roue entraînée (22) au moyen de roues intermédiaires, et la roue entraînée (22) est engrenée avec une crémaillère de l'autre côté de la plaque de liaison (17).

3. Dispositif de nettoyage sous-marin pour une fente de porte selon la revendication 2, **caractérisé en ce que** la base mobile (19) est pourvue d'un premier composant de plaque d'attraction électromagnétique (23) dans une direction faisant face à la paroi interne de la fente de porte (1), une base fixe (20) est pourvue de manière fixe au niveau d'une extrémité de la plaque de liaison (17) éloignée de la base mobile (19), et la base fixe (20) est pourvue d'un second composant de plaque d'attraction électromagnétique (24) dans une direction faisant face à la paroi interne de la fente de porte (1).

4. Dispositif de nettoyage sous-marin pour une fente de porte selon la revendication 1, **caractérisé en ce que** le cadre comprend en outre des renforts transversaux (4), que les renforts transversaux (4) sont reliés de manière fixe aux renforts verticaux (15) et que les renforts transversaux (4) sont pourvus d'une caméra (10).

5. Dispositif de nettoyage sous-marin pour une fente de porte selon la revendication 1, **caractérisé en ce que** le capteur horizontal (7) comprend un socle (25), une bille de contact centrale (27) disposée dans le socle (25), et plusieurs contacts (26) disposés sur une paroi interne du socle (25), la bille de contact centrale (27) est connectée au socle (25) au moyen d'un fil conducteur, et la bille de contact centrale (27) est remplie d'hydrogène ou d'azote.

6. Dispositif de nettoyage sous-marin pour une fente de porte selon l'une quelconque des revendications 1 à 5, **caractérisé en ce que** la surface inférieure de la plaque de fond (5) est pourvue d'au moins un second élément de puissance (8) et d'au moins une structure de dégagement d'obstacles, et la surface inférieure de la plaque de fond (5) est pourvue d'au moins un rail de glissement (16) le long de la direction de la longueur, le second élément de puissance (8) est conçu pour entraîner la structure de dégagement d'obstacles à glisser le long du rail de glissement (16) au moyen d'une chaîne de déplacement (14), le second élément de puissance (8), la structure de dégagement d'obstacles et le rail de glissement (16) sont tous disposés dans une correspondance un à un.

7. Dispositif de nettoyage sous-marin pour une fente de porte selon la revendication 6, **caractérisé en ce que** la structure de dégagement d'obstacles comprend un bras de dégagement d'obstacles (12) et/ou une machine de dragage (11), dans lequel le bras de dégagement d'obstacles (12) et/ou la machine de dragage (11) sont reliés de manière coulissante au rail de glissement (16) au moyen d'une base de déplacement (13).

8. Dispositif de nettoyage sous-marin pour une fente de porte selon la revendication 6, **caractérisé en ce que** la surface supérieure de la plaque de fond (5) est pourvue d'une cabine étanche (6) et d'un générateur (9), le dispositif de commande, une alimentation électrique et un émetteur-récepteur de signaux sont disposés à l'intérieur de la cabine étanche, une surface de la cabine étanche (6) est pourvue d'un panneau de commande, et le générateur (9) est connecté à l'alimentation électrique par un câble.

9. Procédé d'utilisation du dispositif de nettoyage sous-marin pour une fente de porte selon l'une quelconque des revendications 1 à 8,
**caractérisé en ce qu'**un capteur horizontal détecte la nivelance d'une plaque de fond (5) en temps réel dans l'eau et transmet le résultat à un dispositif de commande, et le dispositif de commande commande un ou plusieurs supports montants (2) pour monter et descendre le long de la fente de porte (1) afin d'ajuster la nivelance de la plaque de fond (5).

10. Procédé d'utilisation d'un dispositif de nettoyage sous-marin pour une fente de porte selon la revendication 9, **caractérisé en ce qu'**il comprend les étapes suivantes :
Étape 1, assemblage au niveau d'une ouverture de la fente de porte (1) : sélection d'éléments de cadre appropriés en fonction des dimensions de la fente de porte (1), et assemblage d'un cadre et d'accessoires sur une plateforme à proximité de l'ouverture de la fente de porte (1), puis utilisation d'un équipement de levage pour hisser intégralement l'appareil dans l'orifice de la fente de porte (1), et mise en marche de l'appareil pour fournir de l'énergie de manière à amener les supports montants (2) à être électromagnétiquement attirés vers une paroi interne de la fente de porte (1) pour fixer intégralement l'appareil à l'ouverture de la fente de porte (1) ;
Étape 2, mise en place à l'intérieur de la fente de porte (1) : en attirant électromagnétiquement de manière alternée les bases fixes (20) et les bases mobiles (19) des supports montants (2) respectifs vers la fente de porte (1), les bases mobiles (19) se déplaçant par paliers, amenant le cadre à descendre progressivement de l'orifice de la fente de porte (1) ; dans lequel le capteur horizontal (7) disposé sur la plaque de fond (5) du cadre détecte automatiquement une valeur d'écart et transmet un signal à un appareil d'analyse et de commande, et si la valeur d'écart est hors tolérance, ajustement du cadre à une plage raisonnable au moyen d'un réglage fin par le mouvement d'un seul support montant (2) ou d'une pluralité de supports montants (2), puis poursuite de la descente du cadre ;
Étape 3, vérification et nettoyage des sédiments : après l'entrée du cadre sous l'eau, des caméras (10) du bras de dégagement d'obstacles (12) et de la machine de dragage (11) recueillent des signaux vidéo et, à l'aide d'un programme de capture et de reconnaissance d'images pourvu en interne dans le dispositif de commande, prise de points du contour de l'image acquise pour comparer le contour de l'image acquise avec une image intégrée provenant d'une bibliothèque d'images pour la détermination, de sorte que les caractéristiques, le nombre et le volume des sédiments dans la fente de porte (1) soient raisonnablement reconnus et jugés, même si la qualité de l'eau sous l'eau est turbide ; le dispositif de commande commande le bras de dégagement d'obstacles (12) et la machine de dragage (11) pour effectuer un mouvement multidimensionnel afin de vérifier et de nettoyer la fente de porte (1) et son seuil de fond, le bras de dégagement d'obstacles (12) serre et nettoie de gros blocs d'objets, et la machine de dragage (11) rince et nettoie la boue, ou le bras de dégagement d'obstacles (12) et la machine de dragage (11) se déplacent vers le même endroit au bas du cadre pour un nettoyage coopératif, le bras de dégagement d'obstacles (12) est relié à un manipulateur au moyen d'un manchon rotatif ou d'un système d'encliquetage, le manipulateur est l'un parmi une perceuse électrique, un pistolet de soudage électrique, un grattoir ou un pistolet de pulvérisation ;
Étape 4, retour et retrait du cadre une fois le nettoyage terminé : après avoir terminé le nettoyage, en suivant une opération inverse de la procédure de descente ci-dessus, le fait de remonter le cadre jusqu'à l'orifice de la fente de porte (1) pour terminer l'opération.
